(19) Europäisches Patentamt
European Patent Office
Office européen des brevets

(11) EP 3 907 256 A1

(12) **EUROPEAN PATENT APPLICATION**

(43) Date of publication:
**10.11.2021 Bulletin 2021/45**

(21) Application number: **20172688.2**

(22) Date of filing: **04.05.2020**

(51) Int Cl.:
***C08L 9/00*** *(2006.01)* ***C08L 21/00*** *(2006.01)*
***B60C 1/00*** *(2006.01)* ***C08L 9/06*** *(2006.01)*

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(71) Applicant: **Evonik Operations GmbH**
**45128 Essen (DE)**

(72) Inventors:
- **KRANNIG, Kai-Steffen**
  **44229 Dortmund (DE)**
- **VAIKUNTAM, Sankar Raman**
  **50389 Wesseling (DE)**
- **WEHMEIER, André**
  **50996 Köln (DE)**

(74) Representative: **Evonik Patent Association**
**c/o Evonik Industries AG**
**IP Management**
**Bau 1042A/PB 15**
**Paul-Baumann-Straße 1**
**45772 Marl (DE)**

(54) **RUBBER MIXTURES WITH IMPROVED PROPERTIES**

(57) The invention relates to a rubber mixture comprising rubber and a liquid polybutadiene, liquid at a temperature of 20 °C and a pressure of 98.0665 kPa, to a process for preparing rubber articles by vulcanization using the inventive rubber mixtures as raw material, and to rubber articles obtained by this process.

EP 3 907 256 A1

## Description

The present invention relates to a rubber mixture comprising rubber and a liquid polybutadiene, the polybutadiene being liquid at a temperature of 20 °C and a pressure of 98.0665 kPa, to a process for preparing rubber articles by vulcanisation using the inventive rubber mixtures as raw material, and to rubber articles obtained by this process.

So called "Green Tires" are a trend in the automobile industry. The main objective is reducing rolling resistance, and thus fuel consumption, wet grip improvement while keeping the abrasion resistance constant. Addition of precipitated silicas to the formulations can achieve this objective but the silicas employed exhibit poor compatibility with the rubber matrix. This problem is currently ameliorated by addition of silanes as compatibilizers. Covalent bonding between the filler and the polymer brings the abrasion level of silica-filled tires in line with that of carbon black-filled tires.

Thus, JP 2008-031244 discloses a tire tread rubber composition composed of at least either a natural rubber or a synthetic rubber and a filler component composed exclusively of silicas or of silicas and carbon black, wherein the silica is composed of at least amorphous spherical silicon dioxide microparticles having an average particle diameter in the range from 0.05 to 1.00 μm.

JP 2015-083649, US 20140121316 or EP 2266819 describe the functionalization of anionically polymerized polybutadienes. EP 1479698 describes the functionalization of polybutadienes having a vinyl content below 2%.

EP 2818505 proposes a rubber mixture where diene rubbers are reacted with acrylamides and/or with silane- or tin-modified acrylamides. The production of the systems described in the prior art is highly complex.

Many rubber mixtures used in the rubber and tire industry comprise plasticizers to make the processing easier and to adjust the mechanic and dynamic mechanic properties to the needs of the use application.

A significant disadvantage of the use of plasticizers is their tendency to migrate out of the article made of (vulcanized) rubber over time. Therefore, the properties of the rubber article change over time, too.

An externally perceptible indication sign of this effect is, for example, an increase in the hardness of the vulcanizate and/or embrittlement, which is accompanied by a deterioration in elasticity.

Many of the plasticizer oils contain high amounts of aromatic compounds. Nowadays there is a high demand to reduce or even eliminate such materials in rubber applications for environmental and health reasons.

To solve these problems and challenges reactive plasticizers are used frequently. One kind of reactive plasticizer is for example liquid polybutadiene (see for example US 7,411,018 B2). The reactive plasticizers improve the processing of the rubber mixtures and have the further advantage, that they react with other parts of the rubber mixture and therefore are essentially unable to migrate from the vulcanized rubber article.

However, the use of reactive plasticizers results in tires with deteriorated rolling resistance and higher fuel consumption if a tire is equipped with a tread based on rubber mixtures comprising these reactive plasticizers.

There is accordingly a need for improved rubber mixtures obtainable in simple fashion and exhibiting improved properties.

When comparing the use of different liquid polybutadienes, the inventors surprisingly found, that liquid polybutadienes comprising a high amount of 1,2-vinyl groups improves not only the processing of these rubber mixtures but also the rolling resistance of a tire (tread) made thereof.

The present invention therefore relates to a rubber mixture comprising rubber and a liquid polybutadiene, the polybutadiene being liquid at a temperature of 20 °C and a pressure of 98.0665 kPa, and comprising a high amount of 1,2-vinyl groups, as claimed in the claims.

The present invention is also directed to a process for preparing rubber articles by vulcanization using the inventive rubber mixtures as raw material.

The present invention is further directed to rubber articles obtained by the process according to the invention.

The rubber mixture according to the invention have very good processing properties indicated by very good dynamic mechanical properties.

Rubber articles obtained by vulcanization using the inventive rubber mixtures as raw material have the advantage, that they show a high tensile strength value as well as a high elongation at break value.

Tires or tire treads obtained by processing and vulcanizing the rubber mixture according to the invention have the advantage, that they show good rolling resistance, low abrasion, and good driving indicators in winter / on snow. The low rolling resistance has the advantage, that the use of such tires helps to reduce the fuel consumption of a vehicle.

The mixtures, processes, and products/uses according to the invention are described by way of example hereinafter, without any intention that the invention be restricted to these illustrative embodiments. When ranges, general formulae or classes of compounds are specified below, these are intended to encompass not only the corresponding ranges or groups of compounds which are explicitly mentioned but also all subranges and subgroups of compounds which can be obtained by leaving out individual values (ranges) or compounds. Where documents are cited in the context of the present description, their content shall fully form part of the disclosure content of the present invention, particularly in respect of the matters referred to. Percentages specified hereinbelow are by weight unless otherwise stated. Where average values are reported hereinafter, these are the numerical average, unless stated otherwise. Where properties

of a material are referred to hereinafter, for example viscosities or the like, these are the properties of the material at 25°C, unless stated otherwise. Where chemical (empirical) formulae are used in the present invention, the specified indices may be not only absolute numbers but also average values.

The present invention is directed to a rubber mixture comprising rubber and a liquid polybutadiene, the polybutadiene being liquid at a temperature of 20 °C and a pressure of 98.0665 kPa, wherein in said liquid polybutadiene comprises the 1,3-butadiene-derived monomer units

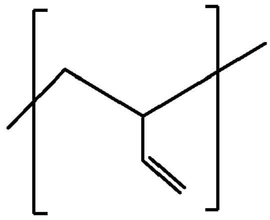

(A),

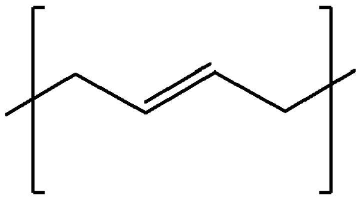

(B),

and

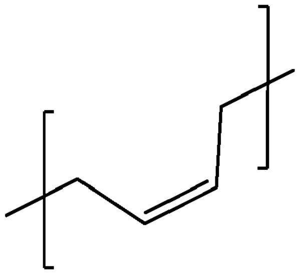

(C)

and wherein the proportion of A in the entirety of the 1,3-butadiene-derived monomer units present in the liquid polybutadiene is more than 40 mol %, preferably from 50 to 90 mol % and more preferably from 55 to 70 mol % and wherein the sum of the proportions of B and C in the entirety of the 1,3-butadiene-derived monomer units present in the liquid polybutadiene is less than or equal to 60 mol %, preferably from 10 to 50 mol % and more preferably 30 to 45 mol %.

The liquid polybutadiene preferably only consists of C- and H-atoms. Therefore, a preferred liquid polybutadiene is a non-functionalized polybutadiene. The liquid polybutadiene has preferably an average molecular weight (Mw), determined by gel permeation chromatography (as described below in the example section), of from 1000 to 10 ,000 g/mol, more preferably of from 1500 to 5000 g/mol, and particularly preferably of from 1750 to 3500 g/mol.

The liquid polybutadiene has preferably a viscosity at 23 °C measured as described in the example section of from 1000 to 12000 mPas, more preferably of from 3000 to 9000 mPas, and most preferably of from 5000 to 7000 mPas.

Suitable liquid polybutadienes can be obtained via catalytic polymerization as described in WO 2018130703 A1 (EP 3348589 B1), especially in examples 1 to 3.

The rubber mixtures according to the invention may further comprise rubber(s), filler(s), preferably precipitated silica and/or silanes, preferably and carbon black, and optionally further rubber auxiliaries.

Fillers employable for the inventive rubber mixtures include for example:

- Carbon blacks: Preferred carbon blacks for use in the present invention are produced by the lamp black, furnace black or gas black process and preferably have BET surface areas of from 20 to 200 $m^2/g$, for example SAF, ISAF, HSAF, HAF, FEF or GPF blacks. The carbon blacks may optionally also contain heteroatoms, for example Si.
- Silicas, preferably precipitated silicas, produced, for example, by precipitation of solutions of silicates, preferably water glass, or prepared by flame hydrolysis of silicon halides, having preferably specific surface areas of from 5 to

1000 $m^2/g$. The precipitated silica may preferably have a BET surface area of 20 to 400 $m^2/g$, particularly preferably of 80 to 280 $m^2/g$, very particularly preferably of 150 to 210 $m^2/g$ and exceedingly preferably of 80 to 185 $m^2/g$. The precipitated silica may have a mean primary particle size of 5 to 400 nm, preferably of 7 to 100 nm, particularly preferably of 7 to 40 nm. The silicas may optionally also be in the form of mixed oxides with other metal oxides, such as oxides of Al, Mg, Ca, Ba, Zn and titanium.

- Synthetic silicates, such as aluminium silicate, alkaline earth metal silicates such as magnesium silicate or calcium silicate, or zeolites. The synthetic silicates preferably having BET surface areas of 20 to 400 $m^2/g$ and primary particle diameters of 10 to 400 nm.
- Natural silicates, such as kaolin, mica, kieselguhr, diatomaceous earth, talc, wollastonite or clay, or other naturally occurring silicas.
- Glass fibres and glass fibre products (mats, strands, fabrics) or glass microbeads.
- Biopolymeric or biooligomeric fillers, e.g. natural or modified starch, cellulose, amylose, amylopectin, cellulose acetate, maltose, cellobiose, lactose, saccharose, raffinose, glycogen, pectins, chitin or natural or modified proteins.
- Other oxidic fillers, for example aluminium oxide, aluminium hydroxide or trihydrate, zinc oxide, boron oxides, magnesium oxides or else transition metal oxides, such as titanium dioxide, or pyrogenic silicas.

The inventive rubber mixtures preferably comprise 0 to 150 parts by wt, more preferred 10 to 150 parts by wt of precipitated silica, 0 to 100 parts by wt, more preferred 1 to 10 party by wt of carbon black, and 1 to 50 parts by wt, more preferred 10 to 40 parts by wt, even more preferred 20 to 30 parts by wt of the liquid polybutadiene, in each case based on 100 parts by weight of rubber.

A preferred inventive rubber mixture comprises 10 to 150 parts by wt of precipitated silica, 0 to 100 parts by wt, more preferred 1 to 10 party by wt of carbon black, and 1 to 50 parts by wt, more preferred 10 to 40 parts by wt, even more preferred 20 to 30 parts by wt of the liquid polybutadiene, in each case based on 100 parts by weight of rubber.

Another preferred inventive rubber mixture comprises 0 to 150 parts by wt, more preferred 0 to 10 parts by wt of precipitated silica, 1 to 100 parts by wt, more preferred 5 to 50 party by wt of carbon black, and 1 to 50 parts by wt, more preferred 10 to 40 parts by wt, even more preferred 20 to 30 parts by wt of the liquid polybutadiene, in each case based on 100 parts by weight of rubber.

It might be advantageous, if the rubber mixtures according to the invention comprise one or more organosilanes. Preferably the rubber mixtures according to the invention comprise 0.5 to 20 parts by wt, preferably 1 to 16 parts by wt, particularly preferably 2 to 12 parts by wt, very particularly preferably 3 to 7 parts by wt, of organosilane(s) based on 100 parts by wt of rubber.

The organosilane(s) may be a silicone oil, alkylsilane, vinylsilane, ethoxysilyl-containing mercaptoorganylsilane, ethoxysilyl-containing thiocyanatoorganylsilane, ethoxysilyl-containing blocked mercaptoorganylsilane and/or ethoxysilyl-containing di/polysulphidic alkoxysilane.

The organosilane(s) may preferably be triethoxyalkylsilane, triethoxyvinylsilane, triethoxytriethoxysilyl-containing mercaptoorganylsilane, triethoxysilyl-containing thiocyanatoorganylsilane, triethoxysilyl-containing blocked mercaptoorganylsilane or triethoxysilyl-containing di/polysulphidic alkoxysilane.
Further organosilanes that may be employed include mercaptoorganyl(alkoxysilanes) having $C_8H_{17}$-O-, $C_{10}H_{21}$-O-, $C_{12}H_{25}$-O-, $C_{14}H_{29}$-O-, $C_{16}H_{33}$-O- or $C_{18}H_{37}$-O- groups bonded to the silicon.

Further organosilanes that may be employed include blocked mercaptoorganyl(alkoxysilanes) having $C_8H_{17}$-O-, $C_{10}H_{21}$-O-, $C_{12}H_{25}$-O-, $C_{14}H_{29}$-O-, $C_{16}H_{33}$-O- or $C_{18}H_{37}$-O- groups bonded to the silicon or blocked mercaptoorganyl(alkoxysilanes) having difunctional alcohols (diols) bonded to the silicon (for example NXT LowV, NXT Ultra-LowV or silanes of the NXT Z group of products from Momentive).

Further organosilanes that may be employed include polysulphidic alkoxysilanes of the formulae EtO-$Si(Me)_2$-$CH_2$-$CH_2$-$CH_2$-$S_2$-$CH_2$-$CH_2$-$CH_2$-$Si(Me)_2(OEt)$, EtO-$Si(Me)_2$-$CH_2$-$CH_2$-$CH_2$-$S_3$-$CH_2$-$CH_2$-$CH_2$-$Si(Me)_2(OEt)$ or EtO-$Si(Me)_2$-$CH_2$-$CH_2$-$CH_2$-$S_4$-$CH_2$-$CH_2$-$CH_2$-$Si(Me)_2(OEt)$.

Further organosilanes that may be added to the inventive rubber mixtures include 3-mercaptopropyl(triethoxysilane) (for example Si 263 from Evonik Industries AG), 3-thiocyanatopropyl(triethoxysilane) (for example Si 264 from Evonik Industries AG), bis(triethoxysilylpropyl)polysulphide (for example Si 69 from Evonik Industries AG), bis(triethoxysilylpropyl)disulphide (for example Si 266 from Evonik Industries AG).

Further organosilanes that may be employed include alkylpolyether-alcohol-containing mercaptoorganylsilanes (for example Si 363 from Evonik Industries AG), alkylpolyether-alcohol-containing thiocyanatoorganylsilanes or / and alkylpolyether-alcohol-containing blocked mercaptoorganylsilanes or alkylpolyether-alcohol-containing polysulphidic silanes.
The alkylpolyether-alcohol-containing mercaptoorganylsilanes may be compounds of general formula (I)

$$(X)_3Si\text{-}R^3\text{-}SH \qquad (I)$$

where X is an alkyl, alkoxy or alkylpolyether group and at least one X is an alkylpolyether group, $R^3$ is a branched or unbranched, saturated or unsaturated, substituted or unsubstituted aliphatic, aromatic or mixedly aliphatic/aromatic divalent hydrocarbon group.

The alkylpolyether-alcohol-containing blocked mercaptoorganylsilanes may be compounds of general formula (II)

$$(X)_3Si\text{-}R^4\text{-}S\text{-}C(O)\text{-}R^5 \qquad \text{(II)}$$

where X is an alkyl, alkoxy or alkylpolyether group and at least one X is an alkylpolyether group, $R^4$ is a branched or unbranched, saturated or unsaturated, substituted or unsubstituted aliphatic, aromatic or mixedly aliphatic/aromatic divalent hydrocarbon group and $R^5$ is a branched or unbranched, saturated or unsaturated, substituted or unsubstituted aliphatic, aromatic or mixedly aliphatic/aromatic monovalent hydrocarbon group, preferably $C_1$-$C_{25}$-, particularly preferably $C_2$-$C_{22}$ -, very particularly preferably $C_7$-$C_{17}$- and exceedingly preferably $C_{11}$-$C_{16}$-hydrocarbon group.

The rubber in the rubber mixtures according to the invention might be one kind of rubber or a mixture of different kinds of rubbers. Preferably the rubber in the rubber mixture according to the invention is a mixture of different kind of rubbers. The rubber in the rubber mixture of the invention can be is selected from natural rubber and/or synthetic rubber. Preferred synthetic rubbers are described, for example, in W. Hofmann, Kautschuktechnologie [Rubber Technology], Genter Verlag, Stuttgart 1980. These include inter alia polybutadiene (BR), polyisoprene (IR), styrene/butadiene copolymers having styrene contents of 1 to 60 wt%, preferably 2 to 50 wt% (SBR), isobutylene/isoprene copolymers (IIR), butadiene/acrylonitrile copolymers having acrylonitrile contents of 5 to 60 wt%, preferably 10 to 50 wt% (NBR), partly hydrogenated or fully hydrogenated NBR rubber (HNBR), ethylene/propylene/diene copolymers (EPDM) and mixtures of these rubbers. Of interest for the production of motor vehicle tires are, in particular, anionically polymerized S-SBR rubbers, preferably having a glass transition temperature above -50 °C, and mixtures thereof with diene rubbers. Rubbers which may preferably be employed include natural rubber or mixtures of natural rubber and diene rubber, preferably polybutadiene, polyisobutene or styrene butadiene copolymer.

Most preferably the rubber in the rubber mixture according to the invention is a mixture of Neodymium butadiene rubber (Nd-BR) and styrene-butadiene random copolymer (S-SBR).

The rubber mixture according to the invention may comprise further rubber auxiliary products such as reaction accelerants, ageing stabilizers, thermal stabilizers, light stabilizers, antiozonants, processing auxiliaries, plasticizers, resins, tackifiers, blowing agents, dyes, pigments, waxes, extenders, organic acids, retardants, metal oxides, and/or activators such as triethanolamine, polyethylene glycol, hexanetriol, which are known to the rubber industry.

The rubber auxiliaries are preferably used in typical amounts determined inter alia by the end use. Typical amounts are, for example, amounts of 0.1 to 50 parts by wt based on rubber. It is generally advisable to add further crosslinkers. Further known crosslinkers that may be used include sulphur or peroxides. The inventive rubber mixtures may additionally comprise vulcanization accelerators. Examples of suitable vulcanization accelerators include mercaptobenzothiazoles, sulphenamides, guanidines, thiurams, dithiocarbamates, thioureas and thiocarbonates. The vulcanization accelerators and sulfur or peroxides can be used in amounts of 0.1 to 10 parts by wt, preferably 0.1 to 5 parts by wt, based on 100 parts by wt of rubber.

The rubber mixtures according to the invention can be obtained by using mixing procedures and mixing equipment known in the art. The blending of the rubbers with the inventive liquid polybutadienes and optionally filler and any rubber auxiliaries, may preferably be carried out in customary mixing units, such as rollers, internal mixers and mixing extruders. The rubber mixtures according to the invention can also be obtained by so called liquid-phase mixing, continuous liquid phase mixing or combining masterbatches as described in the prior art.

The addition of the liquid polybutadienes and/or, preferably and, the addition of the fillers is preferably effected at material temperatures of 50 °C to 200 °C, more preferable at 80 °C to 185 °C, even more preferable between 100°C to 185 °C and particularly preferably at material temperatures of 130 °C to 170 °C, but can also be effected at a later or very early stage at material temperatures of from 40 °C to 100 °C, for example together with further rubber auxiliaries.

The liquid polybutadienes may be added to the mixing operation either in pure form or else applied to an organic or inorganic carrier. Preferred carrier materials are silicas, natural or synthetic silicates, aluminum oxide, waxes, polymers, especially polyethylene or polyethylene waxes, or carbon blacks.

The rubber mixtures of the present invention can be used for every purpose that rubber mixtures of the prior art can be used for too. The rubber mixtures according to the invention may preferably be used for producing molded articles, in particular pneumatic tires, lightweight tires or tire treads.

Preferably the rubber mixture of the invention is used as raw material in the process for preparing rubber articles by vulcanization of rubber mixtures according to the invention. The present invention is therefore also directed to an inventive process for preparing rubber articles by vulcanization of rubber mixtures, wherein the rubber mixture of the invention is used as raw material. The vulcanization of the inventive rubber mixtures is preferably carried out at temperatures of from 100 °C to 200 °C, preferably of from 130 °C to 180°C, optionally under a pressure of from 10 to 200 bar.

The rubber vulcanizates thus obtained are suitable for producing molded articles. The inventive rubber mixtures may be used for producing tires, profiles, cable sheaths, hoses, drive belts, conveyor belts, tire treads, shoe soles, sealing rings and damping elements. If necessary, for one of the articles listed above, the inventive rubber mixes can also be vulcanized with alternative vulcanization methods in a continuous or discontinuous process in which for example radiation, e.g. microwave or a hot salt bath is used.

The present invention is further directed to rubber articles (products) obtained by the process according to the invention. The rubber articles according to the invention preferably are tires or part(s) of a tire. More preferably the rubber articles according to the invention are tire treads. Most preferably the rubber articles according to the invention are all-season tires or a snow (winter) tires ortire treads thereof.

Even without further exposition it is believed that a person skilled in the art will be able to make the widest use of the above description. The preferred embodiments and examples are therefore to be understood merely as a descriptive disclosure which is not in any way intended to be limiting.

The present invention will now be described more particularly with reference to examples. Alternative embodiments of the present invention are obtainable analogously.

Examples

**Raw materials employed:**

The raw materials employed are given in table 1 below.

Table 1: Raw materials used

| Name | Material | Abbreviation | Producer |
|---|---|---|---|
| Europrene® SOL R 72613 | Solution polymerized, dry styrene-butadiene random copolymer that contains a non-staining antioxidant | S-SBR | Versalis S.p.A. |
| Buna® CB 24 | Neodymium Butadiene Rubber, not oil extended; cis 1,4 content: min. 96 %. | Nd-BR | ARLANXEO Deutschland GmbH |
| LBR 307 | Liquid polybutadiene with an ratio of 1,2-vinyl groups of about 16 % | LBR 16% | Kuraray |
| Ricon® 131 | Liquid polybutadiene with an ratio of 1,2-vinyl groups of about 21 % | LBR 21% | Cray Valley |
| Inventive product | Liquid polybutadiene with an ratio of 1,2-vinyl groups of about 60 % | LBR 60% | Evonik Resource Efficiency GmbH |
| VIVATEC® 500 | plasticizer oil (Treated Distillated Aromatic Extract) | TDAE | H&R GmbH Co, KGaA |
| ULTRASIL® 7000 GR | precipitated silica | U7000GR | Evonik Resource Efficiency GmbH |
| Si 266™ | bifunctional silane | Si 266 | Evonik Resource Efficiency GmbH |
| CORAX® N330 | Carbon black | CB | Orion Engineered Carbons GmbH |
| ZnO RS RAL 844 C | zinc oxide | ZnO | Carl Arnsperger Chemikalien GmbH & Co |
| Edenor® ST1 GS | stearic acid | ST1 | Caldic Deutschland GmbH |
| Rhenogran® DPG-80 | dipropylene glycol 80 % Wirkstoff | DPG | Rhein Chemie additives GmbH |
| Rubber Accelerator TBZTD-OP | tetrabenzylthiuram disulfide | TBzTD | WEBER & SCHAER GmbH & Co, KG (produced by Dalian Richon) |

(continued)

| Name | Material | Abbreviation | Producer |
|---|---|---|---|
| Vulkacit® CZ/EG-C | N-cyclohexyl-2-benzothiazolesulfenamide | CBS | LANXESS Deutschland GmbH |
| Sulfur | pulverized sulfur | | HENSELER GmbH |

The amount of vinyl monomer units was determined by IR spectroscopy as described below. LBR 60% obtainable as described in Example 3 of WO 2018130703 A1.

**Methods:**

**Determination of the micro structure:**

IR spectroscopy using polybutadiene standards were used for determination of the molar ratio of the monomer units according to formula (A), (B), and (C). 80 to 250 mg samples of the polybutadiene to be examined were dissolved in 10 mL of carbon disulfide ($CS_2$). If high amounts of monomer units of formula (A) are expected, low concentration (e.g. 80 mg samples) of the polybutadiene is used, if high amounts of monomer units of formula (C) are expected, a higher concentration (e.g. 250 mg samples) of the polybutadiene is used. The termination is done using IR cuvettes (KBr) with a thickness of 0.5 mm. The solvent is substracted and the spectrum is shown in the evaluation range of extinction from 1100 bis 600 $cm^{-1}$. If the resultant extinction exceeds 1, the measurement is repeated using a lower concentration of polybutadiene. The extinctions above base line of the following signals were determined:

trans-1,4-Polybutadiene: 968 $cm^{-1}$
1,2-Polybutadiene: 911 $cm^{-1}$
cis-1,4-Polybutadiene: 730 $cm^{-1}$

The molar ratio of the monomer units is calculated according to the following formula:

$$\%Comp(i) = Ext(i) * 100\% / ( E(i) * c * d *)$$

with

Ext(i) = Extinction above base line
E(i) = Extinction coefficient (substance-specific, determined by calibration measurements) [E] = L/(g*cm)
d = thickness of the cuvette in cm
c = concentration of the sample in g/L.

**Mooney-Viscosity:**

Mooney viscosity of the raw rubber mixture was determined at 100 °C. The value Ms (1+4) / MU was determined according to DIN 53523/3, ISO 289-1, and the value $M_L$ (1+4) / MU was determined according to DIN 53523/3, ISO 289-2.

**Tensile strength:**

The maximum tensile strength, given in MPa, and the elongation at break, given in %, of the vulcanizate were determined according to DIN 53504 / ISO 37. The measurements were done at a temperature of 23 °C using a standard dumb-bell S1 type specimen. The pull-off speed was set to 500 mm/min.

**Shore-A-Hardness:**

The Shore-A-Hardness of the vulcanizates given in SH was determined according to ISO 7619-1 using a test temperature of 23 °C.

**Ball Rebound:**

The rebound resilience of the vulcanizates given in % was determined according to ASTM D 2632 using a steel ball with a weight of 28 g and a diameter of 19 mm and a drop height of 500 mm.

**Viscoelastic Properties:**

Viscoelastic properties of the vulcanizates were determined according to ASTM D 6601-02, DIN 53513 / ISO 4664-1, and ISO 1827.
The maximum loss factor (tan δ max) was determined according to ASTM D 6601-02 using a RPA 2000 from Alpha Technologies as described in the operators manual dated February 1997 at 60 °C and 1.6 Hz within a range of from 0.28 % to 42.0 % elongation.
The complex modulus E* given in MPa of the vulcanizate was determined according to DIN 53513 / ISO 4664-1 using a Zwick Rel 2100, servo-hydraulic testing machine from ZwickRoell GmbH & Co. KG at 16 Hz, with an initial force of 50 N, an amplitude force of 25 N, a temperature adjustment time of 5 min. and a value recording after a testing time of 30 sec.
The complex shear modulus G* in MPa and dissipation factor tan δ were determined according to ISO 1827 using a EPLEXOR® 4000N (Serial No. 1101, NETZSCH GABO Instruments GmbH) in temperature sweep mode with 1.6 Hz, a dynamic deformation of 0.2 %, a static deformation of 0.0%, and a temperature range of from -80 °C to 80 °C.
The molecular weight of the polybutadienes was determined using gel permeation chromatography. Measurements were carried out at 40°C in tetrahydrofuran (THF) at a concentration of 1 g/L and a flow rate of 0.3 ml/min. Chromatographic separation was achieved using a PSS SDV Micro 5μ / 4.6 x 30 mm precolumn and a PSS SDV Micro linear S 5μ / 4.6 x 250 mm (2x) separation column. Detection was by means of an RI detector. Calibration was carried out by means of a polybutadiene standard (PSS-Kit polybutadiene-1,4, Mp 831-106000, Part No.: PSS-bdfkit, Mn: 1830/4330/9300/18000/33500).

**Viscosity:**

The viscosities (cone-plate) of the polybutadienes were determined to DIN 53018 with a Rheometer Physica MCR 301 from ANTON PAAR Germany GmbH.

**Example 1:**

The formulation used for the rubber mixtures is specified in table 2 below for stage 1, 2, and 3. In this table, the unit phr means parts by weight based on 100 parts of rubber (S-SBR and Nd-BR) employed. The liquid polybutadiene (LBR) is employed as substitute for plasticizer oil "TDAE" in the inventive rubber mixtures in varying amounts.

Table 2 Composition of the rubber mixtures used

| Raw material (abbreviation) | Reference rubber mixture I | Reference rubber mixture II | Reference rubber mixture III | Inventive rubber mixture IV |
|---|---|---|---|---|
| 1st stage | phr | phr | phr | Phr |
| S-SBR | 70.00 | 70.00 | 70.00 | 70.00 |
| Nd-BR | 30.00 | 30.00 | 30.00 | 30.00 |
| U7000GR | 80.00 | 80.00 | 80.00 | 80.00 |
| Si 266 | 5.80 | 5.80 | 5.80 | 5.80 |
| TDAE | 25.00 | | | |
| LBR 16% | -- | 25.00 | -- | -- |
| LBR 21% | -- | -- | 25.00 | -- |
| LBR 60% | -- | -- | -- | 25.00 |
| CB | 5.00 | 5.00 | 5.00 | 5.00 |
| ZnO | 2.00 | 2.00 | 2.00 | 2.00 |
| ST1 | 2.00 | 2.00 | 2.00 | 2.00 |

(continued)

| Raw material (abbreviation) | Reference rubber mixture I | Reference rubber mixture II | Reference rubber mixture III | Inventive rubber mixture IV |
|---|---|---|---|---|
| 2nd stage | | | | |
| Batch 1st stage | | | | |
| DPG | 2.5 | 2.5 | 2.5 | 2.5 |
| 3rd stage | | | | |
| Batch 2nd stage | | | | |
| TBzTD | 0.20 | 0.20 | 0.20 | 0.20 |
| CBS | 1.60 | 1.60 | 1.60 | 1.60 |
| Sulfur | 2.00 | 2.00 | 2.00 | 2.00 |

The amount of plasticizer oil, e.g. the LBR XX% and the TDAE, were given to the mixture using processible LDPE bags (Polybeutel 150 × 200 mm, IGEFA Handelsgesellschaft) having a low melting point, filled with 5.0 phr each.

The general process for producing rubber mixtures and vulcanizates thereof is described in "Rubber Technology Handbook", W. Hofmann, Hanser Verlag 1994.

The equipment and the parameters used for processing each rubber mixture are given for stage 1 in table 3a, for stage 2 in table 3b, and for stage 3 in table 3c below.

Table 3a equipment and parameters used for processing of each rubber mixture in stage 1

| | **stage 1** |
|---|---|
| **settings** | |
| mixing unit | HF mixing group GmbH; type GK 1.5 E (Harburg-Freudenberger Maschinenbau GmbH) |
| Fill factor | 0.66 |
| speed | 65 rpm |
| ram pressure | 5.5 bar |
| Mixing chamber temperature | 70 °C |
| Friction ratio | 1:1 |
| **mixing operation** | |
| 0.0 min to 0.5 min | addition of S-SBR, Nd-BR, and 1st bag of plasticizer oil |
| 0.5 min to 1.0 min | addition of 2nd bag of plasticizer oil |
| 1.0 min to 2.0 min | addition of ½ amount of U7000GR and full amount of Si 266, CB, ZnO, ST1 and 3rd bag of plasticizer oil |
| 2.0 min to 2.0 min | aerate and purge (lifting the piston) |
| 2.0 min to 3.0 min | addition of 2nd ½ of U7000GR and 4th bag of plasticizer oil |
| 3.0 min to 3.0 min | aerate and purge (lifting the piston) |
| 3.0 min to 7.0 min | addition of 5th bag of plasticizer oil and mixing at 140 to 155°C (temperature adjusted within this range by varying the speed) |
| 7.0 min | discharge and weigh the batch. Finally form a milled sheet on laboratory two roll mill for 45 s (laboratory roll mill: diameter 250 mm, length 190 mm, roll gap 4 mm, flow temperature 60°C, speed front roll 25 rpm, speed back roll 18 rpm) |
| | 24 h storage at a temperature of 23 °C |

Table 3b equipment and parameters used for processing of each rubber mixture in stage 2

| | **stage 2** |
|---|---|
| **settings** | |
| mixing unit | as in stage 1 |
| Fill factor | 0.63 |
| speed | 70 rpm |
| ram pressure | 5.5 bar |
| Mixing chamber temperature | 75 °C |
| **mixing operation** | |
| 0.0 min to 1.0 min | addition and plasticize of stage 1 batch |
| 1.0 min to 3.0 min | addition of DPG and mixing at 140 to 155°C (temperature adjusted within this range by varying the speed) |
| 3.0 min | discharge and weigh the batch. Finally form a milled sheet on laboratory two roll mill for 45 s, (laboratory roll mill: diameter 250 mm, length 190 mm, roll gap 4 mm, flow temperature 60°C, speed front roll 25 rpm, speed back roll 18 rpm) |
| | storage at 23 °C for up to 24 hours |

Table 3c equipment and parameters used for processing of each rubber mixture in stage 3

| | **stage 3** |
|---|---|
| **settings** | |
| mixing unit | as in stage 1 |
| fill level | 0.60 |
| speed | 55 rpm |
| Mixing chamber temperature. | 50 °C |
| **mixing operation** | |
| 0.0 min to 2.0 min | Plasticize stage 2 batch, adding CBS, TBZTD and sulfur. Mixing at 90 to 110 °C (temperature adjusted within this range by varying the speed) |
| 2.0 min | discharge and weigh the batch. Finally form a milled sheet on laboratory two roll mill for 20 s (laboratory roll mill: diameter 250 mm, length 190 mm, roll gap 4 mm, flow temperature 80°C, speed front roll 16 rpm, speed back roll 11.5 rpm) then, cut and fold over 3* to the right, 3* to the left, and roll 3* with a narrow roll gap (3 mm) and then draw off a milled sheet via roll mill gab with 4 mm. |

The Mooney viscosity of the rubber mixtures (sheets) obtained after 1$^{st}$ and 3$^{rd}$ stage was determined as described above. The results are given in table 4.

The rubber mixtures obtained after stage 3 were vulcanized to obtain the test plates and test specimens. Vulcanization was carried out at a temperature of 165 °C in a typical vulcanizing press for 17 minutes with a compression pressure of 130 bar as per the optimum cure time of $t_{95}$. The $t_{95}$ time was determined by moving die rheometer (rotorless vulcameter) according to DIN 53529/3 procedure at 165 °C.

The rubber testing was executed in accordance with the test methods specified above. The results of the rubber testing are also given in table 4.

Table 4 results of the rubber testing

| | Reference rubber mixture I | Reference rubber mixture II | Reference rubber mixture III | Inventive rubber mixture IV |
|---|---|---|---|---|
| Ms (1+4); (1. stage) / MU | 145 | 145 | 132 | 128 |
| $M_L$ (1+4); (3. stage) / MU | 87 | 85 | 83 | 82 |
| Tensile strength at break / MPa | 13.5 | 10.7 | 10.5 | 13.6 |
| Elongation at break / % | 240 | 250 | 230 | 270 |
| Shore-A-Hardness / SH | 69 | 66 | 67 | 68 |
| Ball Rebound at 60 °C / % | 60 | 55 | 55 | 57 |
| Loss factor maximum at 60 °C; tan δ max / - | 0.188 | 0.199 | 0.217 | 0.187 |
| complex modulus E* at 60 °C / MPa | 10.2 | 10.1 | 9.7 | 10.5 |
| complex shear modulus G* at 60 °C / MPa | 3.6 | 2.9 | 2.7 | 3.3 |
| loss factor tan δ at -10 °C / - | 0.276 | 0.240 | 0.243 | 0.251 |

The inventive rubber mixture IV has an improved processability compared to the rubber mixtures I to III, indicated by the lower Mooney viscosity values for the inventive rubber mixture IV after $1^{st}$ and $3^{rd}$ stage.

Surprisingly, the rubber mixture IV used in the invention achieves an enhanced reinforcing effect to all other mixtures, as it not only has the highest tensile strength but also the highest elongation at break. With approximately the same hardness, the dynamic data can be compared well. Rubber mixture IV according to the invention, has a lower hysteresis in the dynamic tests at 60 °C, which are important for predicting rolling resistance, compared to the reference rubber mixtures I, II, and III.

This can be seen in the increased Ball Rebound values, i.e. improved values compared to the other compounds containing liquid polybutadienes and is confirmed in the lowest tan δ max value measured at 60 °C. Thus, the rubber mixture according to the invention should lead to improved rolling resistance and lower fuel consumption if a tire is equipped with a tread based on the rubber mixture according to the invention.

At the same time, the rubber mixture IV according to the invention can achieve high dynamic complex moduli measured at elevated temperatures of 60 °C (E* and G* at 60 °C), which is an indicator to predict the dry traction of passenger car tire as per the literature. Especially compared to the reference rubber mixtures II and III, an improved dry handling of a passenger car tire equipped with a tread compound according to the rubber mixture IV according to the invention can be expected. In addition, the rubber mixture IV according to the invention shows a higher loss factor value than the reference rubber mixtures II and III at -10 °C. According to the relevant literature, this should lead to improved winter properties and/or have a positive influence on wet grip if this mixture is used to be the basis for a winter tire tread mixture.

**Claims**

1. Rubber mixture comprising rubber and a liquid polybutadiene, liquid at a temperature of 20 °C and a pressure of 98.0665 kPa, **characterized in that** the polybutadiene comprises the 1,3-butadiene-derived monomer units

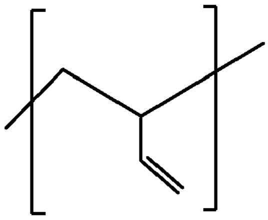

(A),

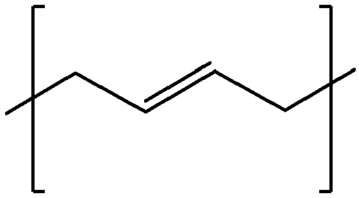

(B),

and

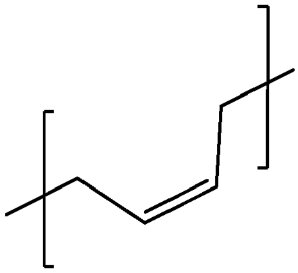

(C)

and wherein the proportion of A in the entirety of the 1,3-butadiene-derived monomer units present in the liquid polybutadiene is more than 40 mol %, preferably from 50 to 90 mol % and more preferably from 55 to 70 mol % and wherein the sum of the proportions of B and C in the entirety of the 1,3-butadiene-derived monomer units present in the liquid polybutadiene is less than or equal to 60 mol %, preferably from 10 to 50 mol % and more preferably 30 to 45 mol %.

2. Rubber mixtures according to Claim 1, **characterized in that** said mixtures comprise 0 to 150 parts by wt of precipitated silica, 0 to 100 parts by wt of carbon black and 1 to 50 parts by wt of the liquid polybutadiene, in each case based on 100 parts by weight of rubber.

3. Rubber mixtures according to any of Claim 1 or 2, **characterized in that** said mixtures comprise an organosilane.

4. Rubber mixtures according to Claim 3, **characterized in that** said mixtures comprise 0.5 to 20 parts by wt of organosilane based on 100 parts by wt of rubber.

5. Rubber mixtures according to any of Claim 1 to Claim 4, **characterized in that** said rubber is one kind of rubber or a mixture of different kinds of rubbers.

6. Rubber mixtures according to any of Claim 1 to Claim 5, **characterized in that** said rubber is selected from natural rubber and/or synthetic rubber.

7. Rubber mixtures according to Claim 5 or 6, **characterized in that** said rubber is a mixture of Nd-BR and S-SBR.

8. Rubber mixtures according to any of Claim 1 to Claim 7, **characterized in that** said liquid polybutadiene consists only of C- and H-atoms.

9. Rubber mixtures according to any of Claim 1 to Claim 8, **characterized in that** said liquid polybutadiene has an average molecular weight (Mw), determined by gel permeation chromatography, of from 1000 to 10 ,000 g/mol,

more preferably of from 1500 to 5000 g/mol, and particularly preferably of from 1750 to 3500 g/mol.

**10.** Process for preparing rubber articles by vulcanisation of rubber mixtures, **characterized in that** a rubber mixture as claimed in any of Claim 1 to Claim 9 is used as raw material.

**11.** Rubber articles obtained by a process as claimed in Claim 10.

**12.** Rubber articles according to Claim 11, **characterized in that** it is a tire or a part of a tire.

**13.** Rubber articles according to Claim 12, **characterized in that** it is a tire tread.

**14.** Rubber articles according to Claim 12 or 13, **characterized in that** the tire is an all-season tire or a snow (winter) tire.

Europäisches Patentamt
European Patent Office
Office européen des brevets

# EUROPEAN SEARCH REPORT

Application Number
EP 20 17 2688

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X<br><br><br>L | WO 2019/044888 A1 (KURARAY CO [JP])<br>7 March 2019 (2019-03-07)<br>* the whole document *<br>& EP 3 677 637 A1 (KURARAY CO [JP])<br>8 July 2020 (2020-07-08)<br>* See liquid butadienes B-1 and B-4.<br>Production examples 1,4.<br>Comparative examples 2;<br>paragraphs [0150], [0151]; claims 1-14;<br>examples 1,2,7,8,9; tables 1,2,3,4,5,6,7 *<br>----- | 1-14<br><br><br>1-14 | INV.<br>C08L9/00<br>C08L21/00<br>B60C1/00<br>C08L9/06 |
| X<br><br><br>L | WO 2019/044889 A1 (KURARAY CO [JP])<br>7 March 2019 (2019-03-07)<br>* the whole document *<br>& EP 3 677 635 A1 (KURARAY CO [JP])<br>8 July 2020 (2020-07-08)<br>* Production Example 5;<br>paragraphs [0153] - [0155]; claims 1-12;<br>example 7; tables 2,4 *<br>----- | 1-14<br><br><br>1-14 | |
| X<br><br><br>L | WO 2019/044893 A1 (KURARAY CO [JP])<br>7 March 2019 (2019-03-07)<br>* the whole document *<br>& EP 3 677 638 A1 (KURARAY CO [JP])<br>8 July 2020 (2020-07-08)<br>* Modified liquid diene rubber B-1<br>Liquid diene rubber B'-2<br>Comparative example 3;<br>paragraphs [0152] - [0153]; claims 1-13;<br>example 1; tables 1,2 *<br>----- | 1-14<br><br><br>1-14 | TECHNICAL FIELDS SEARCHED (IPC)<br>C08L<br>B60C |
| X<br><br>Y | JP 2019 094463 A (YOKOHAMA RUBBER CO LTD)<br>20 June 2019 (2019-06-20)<br>* example 8; table 2 *<br>----- | 1-6,8-14<br><br>7 | |

-/--

The present search report has been drawn up for all claims

1

| Place of search | Date of completion of the search | Examiner |
|---|---|---|
| Munich | 23 July 2020 | Barker, Stephan |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

Europäisches Patentamt
European Patent Office
Office européen des brevets

# EUROPEAN SEARCH REPORT

Application Number
EP 20 17 2688

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X<br><br><br>Y | DE 10 2015 210424 A1 (CONTINENTAL REIFEN DEUTSCHLAND GMBH [DE]) 8 December 2016 (2016-12-08)<br>* paragraph [0081]; claims 1-11; examples V2,V3,E1,V5,E2,E3; tables 1,2 *<br>----- | 1-6,8-14<br><br><br>7 | |
| X | EP 1 035 164 A1 (GOODYEAR TIRE & RUBBER [US]) 13 September 2000 (2000-09-13)<br>* Samples, C,D,E;<br>page 7; claims 1-10; tables 1,2 *<br>----- | 1,2,5,6,<br>8-14 | |
| X<br><br>Y | JP 2009 203288 A (YOKOHAMA RUBBER CO LTD) 10 September 2009 (2009-09-10)<br>* L-BR-3;<br>example 5; table 2 *<br>----- | 1-6,8-14<br><br>7 | |
| X<br><br><br>L | WO 2019/044891 A1 (KURARAY CO [JP]) 7 March 2019 (2019-03-07)<br>* the whole document *<br>& US 2020/207957 A1 (KANBARA HIROSHI [JP] ET AL) 2 July 2020 (2020-07-02)<br>* Modified liquid diene rubber B-8; paragraphs [0179] - [0181], [0202]; claims 1-11; example 8; tables 1,2 *<br>----- | 1-14<br><br><br>1-14 | TECHNICAL FIELDS SEARCHED (IPC) |
| Y | US 2018/072874 A1 (KATO MANABU [JP] ET AL) 15 March 2018 (2018-03-15)<br>* paragraph [0036] *<br>----- | 7 | |

The present search report has been drawn up for all claims

| Place of search | Date of completion of the search | Examiner |
|---|---|---|
| Munich | 23 July 2020 | Barker, Stephan |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

## ANNEX TO THE EUROPEAN SEARCH REPORT ON EUROPEAN PATENT APPLICATION NO. EP 20 17 2688

This annex lists the patent family members relating to the patent documents cited in the above-mentioned European search report. The members are as contained in the European Patent Office EDP file on The European Patent Office is in no way liable for these particulars which are merely given for the purpose of information.

23-07-2020

| Patent document cited in search report | Publication date | Patent family member(s) | Publication date |
| --- | --- | --- | --- |
| WO 2019044888 A1 | 07-03-2019 | CA 3074203 A1 | 07-03-2019 |
| | | CN 111032770 A | 17-04-2020 |
| | | EP 3677637 A1 | 08-07-2020 |
| | | KR 20200040832 A | 20-04-2020 |
| | | TW 201920296 A | 01-06-2019 |
| | | US 2020207956 A1 | 02-07-2020 |
| | | WO 2019044888 A1 | 07-03-2019 |
| WO 2019044889 A1 | 07-03-2019 | CA 3074175 A1 | 07-03-2019 |
| | | CN 111032766 A | 17-04-2020 |
| | | EP 3677635 A1 | 08-07-2020 |
| | | KR 20200040282 A | 17-04-2020 |
| | | TW 201920297 A | 01-06-2019 |
| | | WO 2019044889 A1 | 07-03-2019 |
| WO 2019044893 A1 | 07-03-2019 | CA 3074360 A1 | 07-03-2019 |
| | | CN 111032769 A | 17-04-2020 |
| | | EP 3677638 A1 | 08-07-2020 |
| | | KR 20200040833 A | 20-04-2020 |
| | | TW 201920419 A | 01-06-2019 |
| | | WO 2019044893 A1 | 07-03-2019 |
| JP 2019094463 A | 20-06-2019 | NONE | |
| DE 102015210424 A1 | 08-12-2016 | CN 107709437 A | 16-02-2018 |
| | | DE 102015210424 A1 | 08-12-2016 |
| | | EP 3303004 A1 | 11-04-2018 |
| | | US 2018100058 A1 | 12-04-2018 |
| | | WO 2016198177 A1 | 15-12-2016 |
| EP 1035164 A1 | 13-09-2000 | BR 0000970 A | 28-11-2000 |
| | | CA 2296896 A1 | 08-09-2000 |
| | | EP 1035164 A1 | 13-09-2000 |
| | | JP 2000273245 A | 03-10-2000 |
| | | US 6242523 B1 | 05-06-2001 |
| JP 2009203288 A | 10-09-2009 | JP 5233317 B2 | 10-07-2013 |
| | | JP 2009203288 A | 10-09-2009 |
| WO 2019044891 A1 | 07-03-2019 | CA 3074182 A1 | 07-03-2019 |
| | | CN 111032763 A | 17-04-2020 |
| | | EP 3677634 A1 | 08-07-2020 |
| | | KR 20200040284 A | 17-04-2020 |
| | | TW 201920422 A | 01-06-2019 |
| | | US 2020207957 A1 | 02-07-2020 |
| | | WO 2019044891 A1 | 07-03-2019 |

EPO FORM P0459

For more details about this annex : see Official Journal of the European Patent Office, No. 12/82

## ANNEX TO THE EUROPEAN SEARCH REPORT ON EUROPEAN PATENT APPLICATION NO. EP 20 17 2688

This annex lists the patent family members relating to the patent documents cited in the above-mentioned European search report.
The members are as contained in the European Patent Office EDP file on
The European Patent Office is in no way liable for these particulars which are merely given for the purpose of information.

23-07-2020

| Patent document cited in search report | Publication date | Patent family member(s) | Publication date |
|---|---|---|---|
| US 2018072874 A1 | 15-03-2018 | CN 107429005 A | 01-12-2017 |
| | | DE 112016001718 T5 | 28-12-2017 |
| | | JP 6070754 B2 | 01-02-2017 |
| | | JP 2016199709 A | 01-12-2016 |
| | | US 2018072874 A1 | 15-03-2018 |
| | | WO 2016167282 A1 | 20-10-2016 |

EPO FORM P0459

For more details about this annex : see Official Journal of the European Patent Office, No. 12/82

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- JP 2008031244 A
- JP 2015083649 A
- US 20140121316 A
- EP 2266819 A
- EP 1479698 A
- EP 2818505 A
- US 7411018 B2
- WO 2018130703 A1
- EP 3348589 B1

### Non-patent literature cited in the description

- **W. HOFMANN.** Rubber Technology Handbook. Hanser Verlag, 1994